Europäisches Patentamt

European Patent Office

Office européen des brevets

(19)

(11) Veröffentlichungsnummer : **0 073 256**
**B1**

(12) # EUROPÄISCHE PATENTSCHRIFT

(45) Veröffentlichungstag der Patentschrift :
28.11.84

(51) Int. Cl.³ : **B 29 C 27/02**

(21) Anmeldenummer : **81106588.7**

(22) Anmeldetag : **25.08.81**

(54) Verfahren und Vorrichtung zum Herstellen eines Vergaserschwimmers.

(43) Veröffentlichungstag der Anmeldung :
09.03.83 Patentblatt 83/10

(45) Bekanntmachung des Hinweises auf die Patenterteilung : 28.11.84 Patentblatt 84/48

(84) Benannte Vertragsstaaten :
**AT BE CH FR GB IT LI LU NL SE**

(56) Entgegenhaltungen :
DE-U- 7 425 376
FR-A-   930 330
FR-A- 1 337 550
FR-A- 1 416 625
FR-A- 2 012 450
NL-C-   105 031
US-A- 2 665 739
US-A- 2 681 097
US-A- 3 053 726
US-A- 3 231 444
US-A- 3 686 056
US-A- 4 239 575

(73) Patentinhaber : **Allit-Plastikwerk. Kimnach & Co.**
**Postfach 105**
**D-6550 Bad Kreuznach (DE)**

(72) Erfinder : **Kalinowsky, Hans**
**Rotlay Mühle**
**D-6550 Bad Kreuznach (DE)**

(74) Vertreter : **Strasse, Joachim et al**
**Strasse & Stoffregen, Patentanwälte Zweibrücken-**
**strasse 17**
**D-8000 München 2 (DE)**

**Beschreibung**

Die Erfindung betrifft ein Verfahren zum Herstellen eines Vergaserschwimmers sowie eine Vorrichtung zur Durchführung dieses Verfahrens gemäß den Oberbegriffen der Ansprüche 1 bzw. 4.

Ein solches Verfahren ist aus der FR-A-930 330 bekannt. Dort werden zwei Halbkugeln aus Kunststoff zu einem Spielball zusammengefügt. Die beiden Ballhälften werden zu diesem Zweck in zwei Aufnahmekörper eingefügt, wobei im Bereich der zu verschweißenden Kanten die Ballhälften jeweils durch Führungsringe an ihren Außenseiten umschlossen werden. Nach Plastifizierung der zu verschweißenden Kanten wird eine Halbkugel mittels ihres Aufnahmekörpers gegen die andere Halbkugel gedrückt, wobei die beiden Führungsringe stirnseitig gegeneinander stoßen und die verschmelzenden Kanten umschließen. Dieses vorbekannte Verfahren genügt den Dichtigkeits- und Präzisionsanforderungen bei der Herstellung von Spielbällen.

Vergaserschwimmer müssen aber über lange Zeitspannen in chemisch sehr aggressiver Atmosphäre absolut dicht bleiben. Die Dichtigkeitsanforderungen an Vergaserschwimmern sind so hoch, daß nur ein Ausschuß von weniger als 0,3 ‰ auftreten darf. Um solchen Dichtigkeitsanforderungen zu genügen, ist es besonders wichtig, darauf zu achten, daß beim Verschweißen keine Spannungen im Material erzeugt werden, die insbesondere bei hohen Temperaturbelastungen zu Undichtigkeiten führen können.

Beim aus der FR-A-930 330 vorbekannten Verfahren wird die gesamte stumpfte Kante der beiden Hohlkörper plastifiziert, so daß eine gleichmäßige, zeitlich und räumlich völlig homogene Plastifizierung insbesondere bei großen Stückzahlen nicht mit der bei Vergaserschwimmern erforderlichen Zuverlässigkeit erreicht wird. Für die aus der FR-A-930 330 bekannte Vorrichtung gilt Entsprechendes.

Aus der FR-A-1 416 625 (Fig. 5) ist es bekannt, zu verschweißende Kunststoffteile im Bereich der Schweißkanten keilförmig auszubilden.

Der vorliegenden Erfindung liegt die Aufgabe zugrunde, das aus der FR-A-930 330 vorbekannte Verfahren zum Zusammenfügen zweier Kunststoff-Hohlteile derart weiterzubilden, daß der gebildete Vergaserschwimmer auch unter größten Temperaturbelastungen und in chemisch aggressiver Umgebung solchen Dichtigkeitsanforderungen genügt, daß ein serienmäßiger Einsatz gefahrlos erfolgen kann.

Diese Aufgabe wird nach dem erfindungsgemäßen Verfahren gemäß den Merkmalen des kennzeichnenden Teiles des Anspruches 1 gelöst, während die erfindungsgemäße Vorrichtung zur Lösung dieser Aufgabe durch die Merkmale des kennzeichnenden Teiles des Anspruches 4 bestimmt ist.

Die Unteransprüche 2 und 3 bzw. 5-7 beschreiben vorteilhafte Weiterbildungen des erfindungsgemäßen Verfahrens bzw. der Vorrichtung.

Nachfolgend sind zwei Ausführungsbeispiele der Erfindung anhand der Zeichnung im einzelnen beschrieben.

Es zeigen :

Figuren 1 bis 4 Draufsichten eines Ausführungsbeispiels einer erfindungsgemäßen Vorrichtung mit herausgebrochenem Teil in verschiedenen Phasen bei der Herstellung eines Vergaserschwimmers und

Figur 5 einen Ausschnitt eines weiteren Ausführungsbeispiels einer erfindungsgemäßen Vorrichtung.

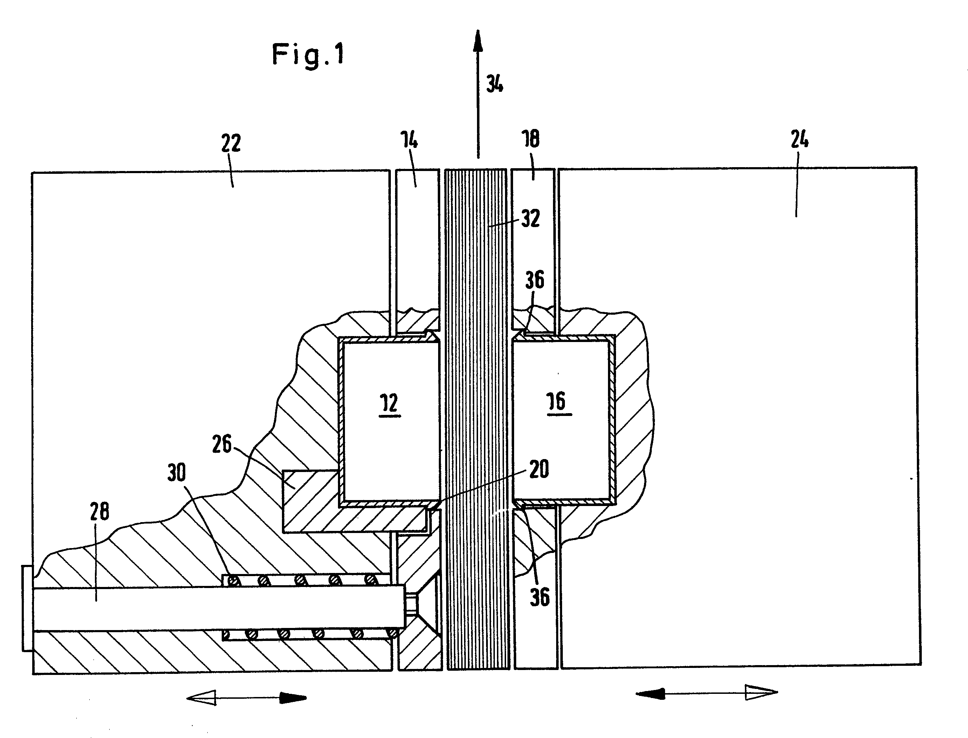

In den Fig. 1 bis 4 sind in Draufsicht und teilweise weggebrochen die wesentlichen Elemente eines Ausführungsbeispiels einer erfindungsgemäßen Vorrichtung zum Verschweißen eines aus zwei Teilen zusammensetzbaren Vergaserschwimmers dargestellt.

Dabei befindet sich ein Teil 12 in den Ausführungsbeispielen nach den Fig. 1 bis 4 in einer linken Aufnahmeplatte 14. Das mit dem Teil 12 zu verschweißende Teil oder Gegenstück 16 befindet sich in einer rechten Aufnahmeplatte 18. Wie die Bilddarstellungen verdeutlichen, sind die Vergaserschwimmerteile 12 und 16 in ihren Randbereichen derart ausgebildet, daß die Kanten keilförmig verlaufen. In den Ausführungsbeispielen sind diese keilförmigen Kanten allgemein mit dem Bezugszeichen 20 versehen. Die Vergaserschwimmerteile 12 und 16 sind in den Aufnahmeplatten so angeordnet, daß die Frontflächen der Platten 14 und 18 mit den vorderen Kanten der Vergaserschwimmerteile 12 und 16 fluchten. Wie die Fig. 1 außerdem verdeutlicht, schließen sich an die Aufnahmeplatten 14 und 18 jeweils die Teile 12 und 16 in ihren Endbereichen umfassende vorzugsweise quaderförmige Aufnahmeelemente 22 bzw. 24 an, die relativ zu den Aufnahmeplatten 16 und 18 bewegbar sind. Von den Aufnahmeelementen 22 und 24 gehen Druckstücke 26 aus, die in die Aufnahmeplatten hineinragen und demzufolge gleichfalls relativ zu diesen bewegbar sind. Um die Aufnahmeelemente 22 bzw. 24 zusammen mit den Druckstücken 26 gegen die Aufnahmeplatten 14 bzw. 18 und die darin ruhenden Vergaserschwimmerteile 12 und 16 bewegen zu können, ist außerdem in den Fig. 1 bis 4 verdeutlicht, daß die Bewegung zwischen den erwähnten Teilen erst nach Überwinden einer Federkraft erfolgen kann. Zu diesem Zweck ist ein Führungsstift oder Bolzen 28 über eine Schraube starr mit der Aufnahmeplatte 14 verbunden. Zwar ist in der Zeichnung nur ein Bolzen 28 dargestellt, jedoch liegen zur gleichmäßigen Kraftverteilung mehrere solche Bolzen 28 bzw. entsprechend wirkende Verbindungselemente vor. Dabei durchdringen die Bolzen 28 durch eine Ausnehmung die Aufnahmeelemente 22 bzw. 24. Im an die Aufnahmeplatten angrenzenden Bereich ist die Ausnehmung für den Bolzen 28 erweitert, um zusätzlich eine Feder 30 einbringen zu können. Diese übt zwischen dem Aufnahmeelement und der angrenzenden Aufnahmeplatte eine Kraft derart aus, daß die Elemente zueinander beabstandet sind. Erst durch eine Krafteinwirkung auf das Aufnahmeelement 22 bzw. 24 kann dann die Federkraft überwunden werden, um das Aufnahmeelement mit den Druckstücken und den darin eingebetteten Vergaserschwimmerteilen relativ zu der jeweiligen Aufnahmeplatte bewegen zu können.

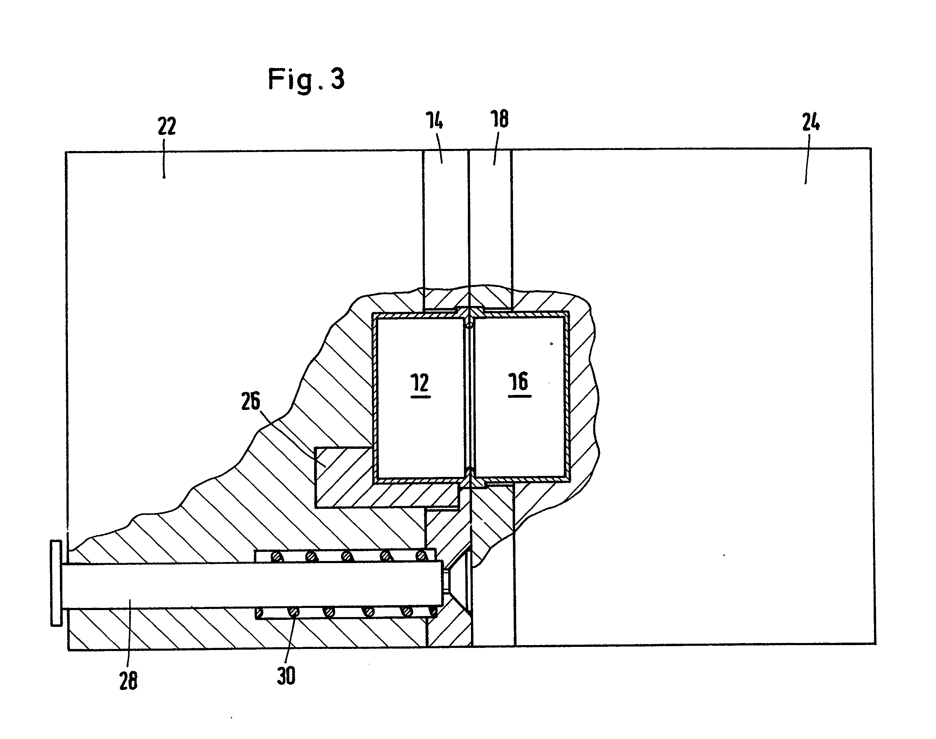

Des weiteren ist in Fig. 1 zwischen den Aufnahmeplatten 16 und 18 ein Heizelement 32 dargestellt, welches eine Erwärmung der keilförmig verlaufenden Kanten 20 hervorruft. Dabei erfolgt eine Energieabgabe jedoch nur so lange, bis ausschließlich die keilförmig ausgebildeten Kanten 20 plastifiziert werden. Sodann wird das Heizelement 32 entfernt. Dies ist durch den Pfeil 34 angedeutet. Als nächster Schritt werden die Aufnahmeplatten 16 und 18 mit den im Abstand dazu angeordneten Aufnahmeelementen 22 und 24 aufeinanderzu bewegt, damit die Frontflächen der Aufnahmeplatten 14 und 18 in Berührung gelangen. Da die freien Kanten der Vergaserschwimmerteile 12 und 16 mit den Frontflächen der Aufnahmeplatten 14 und 18 fluchten, erfolgt ohne gegenseitige Durchdringung nur ein Berühren der Teile 12 und 16. Dies ist das Fügen. Sodann erfolgt eine Krafteinwirkung auf die Aufnahmeelemente 22 und 24 mit den dazugehörigen Druckstücken 26 gegen die Kraft der Feder 30. Als Folge davon tritt eine Relativbewegung zu den Aufnahmeplatten 14 und 18 ein. Gleichzeitig werden die Vergaserschwimmerteile 12 und 16 aufeinanderzu bewegt, um sich ausschließlich im plastischen Bereich der Kanten 20 zu durchdringen. Dies ist in der Fig. 3 veranschaulicht. Da in den Ausführungsbeispielen nach den Fig. 1 bis 4 die Vergaserschwimmerteile nicht über die Frontflächen der Aufnahmeplatten 14 und 18 hervorstehen, kann beim Berühren und Durchdringen der Kanten 20 ein Wegspritzen von plastifiziertem Material nach außen nicht erfolgen. Dadurch ergibt sich der Vorteil, daß die Nahtstellen zwischen den zusammengeschweißten Teilen 12 und 14 überaus gleichmäßig ausgebildet sind. Unregelmäßigkeiten sind nicht zu beobachten. Daraus ergibt sich stets eine gute Funktionstüchtigkeit des Schwimmers. Durch das Zusammenschmelzen der Vergaserschwimmerteile 12 und 16 durch das Durchdringen ausschließlich im plastischen Bereich der Kanten 20 ist außerdem sichergestellt, daß Spannungen nicht aufgebaut werden. Demzufolge ist auch bei großen Temperaturschwankungen gewährleistet, daß durch Sprünge oder Risse Undichtigkeiten nicht auftreten können.

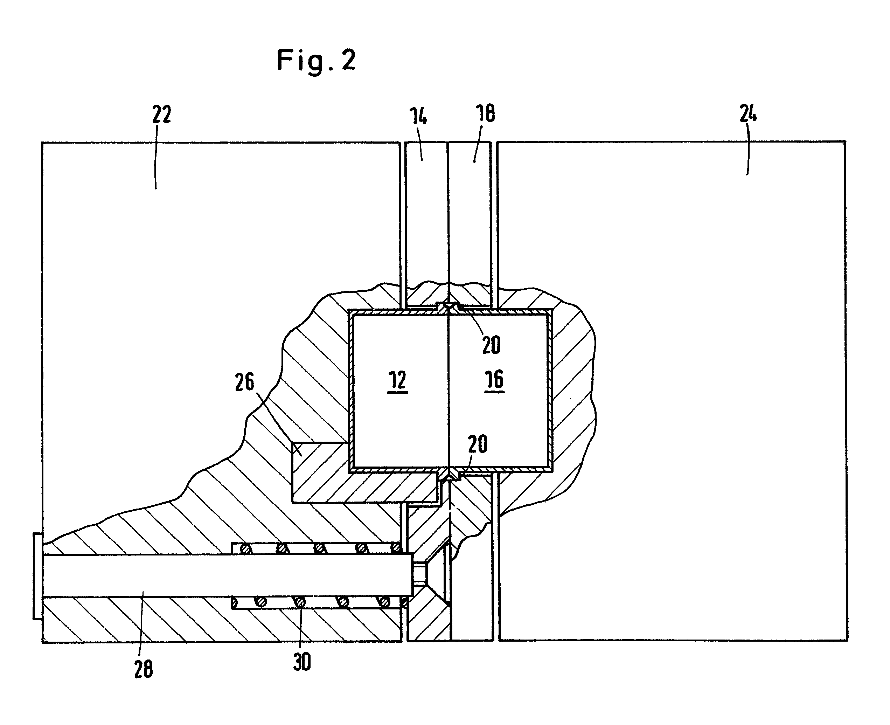

Die Fig. 1 und 2 verdeutlichen des weiteren, daß ohne Schwierigkeiten die Teile 12 und 16 des Vergaserschwimmers derart in die entsprechende Gegen- oder Negativform der Aufnahmeplatte 14 bzw. 18 und das Aufnahmeelement 22 bzw. 24 eingebracht werden können, daß die Kanten 20 und Frontflächen der Aufnahmeplatten 14, 18 fluchten, da der keilförmig ausgebildete Rand 20 über die äußere Fläche des Vergaserschwimmerteils 12 bzw. 14 im Randbereich hervorsteht und in Art eines wulstförmigen Kragens ringförmig angeordnet ist. Entsprechend der Höhe dieses Wulstes weist die Aufnahmeplatte 14 bzw. 18 eine umlaufende ringförmige Ausnehmung 36 auf, deren Tiefe der Höhe des Kragens 20 entspricht. Demzufolge ist sichergestellt, daß bei Aufliegen des unteren Wulstrandes auf der Grundfläche der Ausnehmung 36 die freien Enden der Ränder 20 mit der Frontfläche der jeweiligen Aufnahmeplatten 14 oder 18 fluchten.

Die wulstförmige Ausbildung des keilförmig ausgebildeten Kragens 20 hat den weiteren Vorteil, daß die Druckstücke 26 die wulstförmigen Randbereiche in Form der keilförmig ausgebildeten Kanten 20 hintergreifen können, um dadurch die Vorwärtsbewegung des jeweiligen Teils 12 bzw. 16 auf das gegenüberliegende Teil 16 bzw. 12 mit konstanter Kraftbeeinflussung bewirken zu können.

Da eines der Teile 12 bzw. 14 mit einem Scharnier 38 versehen ist, kann bei der Wärmebeeinflussung durch das Heizelement 32 der entsprechende Bereich gleichfalls erweichen. Außerdem ist in diesem Bereich die umlaufende Wulst 20 von der umlaufenden ringförmigen Ausnehmung 36 nicht vollständig umschlossen, da andernfalls ein einfaches Einbringen des Vergaserschwimmerteils nicht möglich wäre. Das wiederum würde bedeuten, daß in diesem Bereich beim Durchdringen der plastischen Randbereiche 20 eine unkontrollierte Beeinflussung erfolgen könnte, die im späteren Betrieb zu Undichtigkeiten oder Schadstellen führen könnte.

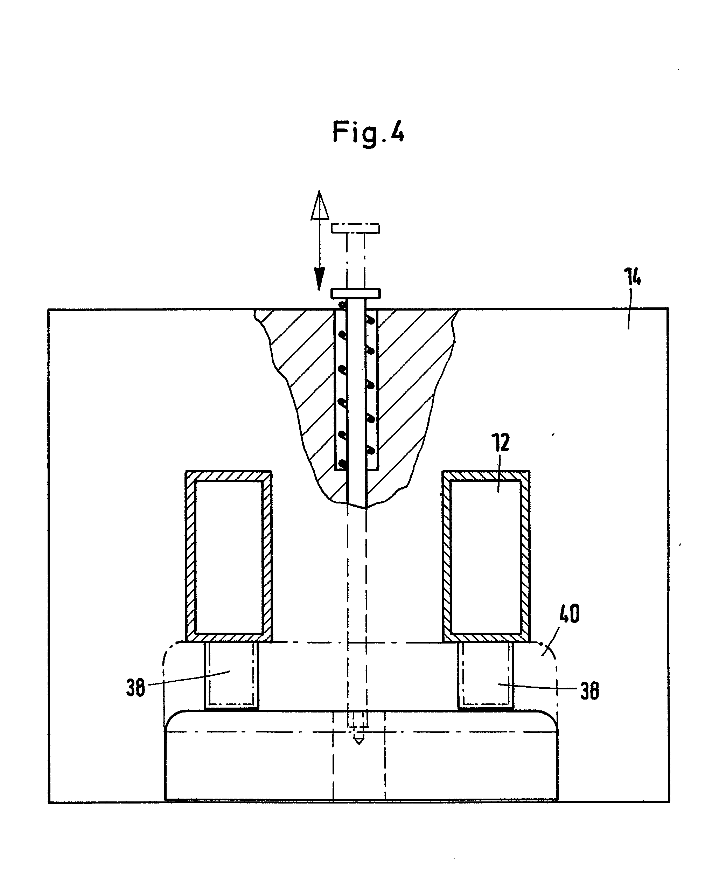

Um diese Nachteile von vorneherein auszuschließen, ist die entsprechende Aufnahmeplatte, im Ausführungsbeispiel nach Fig. 4 die Aufnahmeplatte 14, im Bereich der Scharniere (die Aufnahmeplatte kann gleichzeitig zwei oder mehr Vergaserschwimmerteile aufnehmen) mit einer rechteckförmigen Ausnehmung versehen, in der eine Abdeckplatte 40 bewegbar angeordnet ist. Die äußere Fläche der Abdeckplatte 40 fluchtet selbstverständlich mit der Frontfläche der Aufnahmeplatte 14 und ist derart in dieser verschiebbar, daß einmal die Ausnehmung für das Scharnier 38 freigegeben ist oder nicht. Nachdem das entsprechende Vergaserschwimmerteil 12 in die in der Aufnahmeplatte 14 vorgesehene Gegen- oder Negativform eingebracht worden ist, wird die Abdeckplatte 40 derart verschoben, daß der obere Rand die im Scharnierbereich verlaufende Wulst und keilförmig ausgebildete Kante hintergreift. Dadurch ergibt sich der Vorteil, daß die plastisch zu verformende umlaufende Kante 20 an allen Stellen der gleichen Wärmebeeinflussung bzw. der gleichen Wärmeabfuhr unterworfen ist.

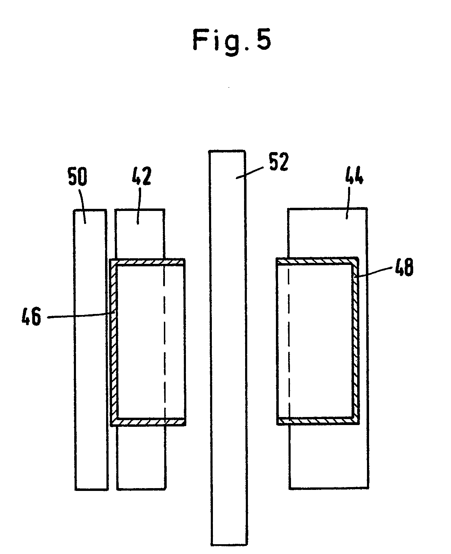

Ist nach den Fig. 1 bis 4 die Kraftbeeinflussung auf die zu verschweißenden Vergaserschwimmerteile symmetrisch aufgeteilt, wirkt also auf beide Vergaserteilrückflächen gleichermaßen eine Kraft, um eine Beeinflussung der Kanten ausschließlich innerhalb der plastischen Verformung zum Verschmelzen dieser erfolgen zu lassen, so ist nach dem Ausführungsbeispiel nach der Fig. 5 eine asymmetrische Krafteinwirkung möglich.

Der schematisch und im Ausschnitt dargestellte Teil eines weiteren Ausführungsbeispiels nach Fig. 5 ist gleichfalls aus zwei Aufnahmeplatten 42 und 44 aufgebaut, in die die zusammenzusetzenden Teile 46 und 48 des Vergaserschwimmers einsetzbar sind. Dabei ist entweder das Teil 46 oder 48 mit dem erforderlichen Scharnier verbunden, und kann nach Einbringen in die entsprechende Aufnahmeplatte gleichfalls in diesem Bereich durch eine nicht dargestellte Abdeckplatte gegen eine unerwünschte Wärmebeeinflussung abgeschirmt werden.

Wie des weiteren der Fig. 5 zu entnehmen ist, sind die Ausnehmungen der Aufnahmeplatten 42 bzw. 44 der äußeren Form der Vergaserschwimmerteile 46 und 48, wie in dem Ausführungsbeispiel nach den Fig. 1 bis 4, angepaßt. Die Aufnahmeplatte 44 ist dabei rückseitig geschlossen, wohingegen die Aufnahmeplatte 42 offen ist und im Abstand dazu eine zu dieser beweglichen Platte 50 aufweist.

Des weiteren ist zwischen den Aufnahmeplatten 42 und 44 ein Heizelement 52 dargestellt, welches die erforderliche Energie abgibt, um die Kanten der Vergaserschwimmerteile 46 und 48 plastisch werden zu lassen.

Wie nach den Ausführungsbeispielen der Fig. 1 bis 4, sind auch die vorliegenden Kanten der Vergaserschwimmerteile keilförmig ausgebildet. Zwar ist im Ausführungsbeispiel die Kante nicht wulstförmig dargestellt, jedoch kann eine entsprechende Ausgestaltung wie bei den zuvor beschriebenen Vergaserschwimmern gleichfalls vorliegen. Wichtig ist jedoch, daß der Vorderbereich — wie erwähnt — keilförmig gestaltet ist. Dieser Bereich wird auch ausschließlich durch die Wärmebeeinflussung von dem Heizelement 52 plastisch.

Die Funktion der Vorrichtung ist nun wie folgt :

Nachdem die Vergaserschwimmerteile 46 und 48 in die entsprechenden Aufnahmeplatten 42 und 44 eingebracht sind, werden diese in einem definierten Abstand zu dem Halteelement 52 bewegt. Dabei hat sich herausgestellt, daß der Abstand vorzugsweise im Millimeterbereich liegt. Selbstverständlich ist dieser Abstand abhängig von der Dauer der Erwärmung, um die Kanten plastisch werden zu lassen bzw. von dem Material des Vergaserschwimmers.

Nach einer einstellbaren Zeitspanne, also wenn die Kanten plastisch geworden sind, wird das Heizelement 52 entfernt und die Aufnahmeplatten 42, 44 aufeinanderzubewegt, um anschließend aufeinanderzuliegen. Dadurch gelangen die Vergaserschwimmerteile 46 und 48 innerhalb des plastischen Bereichs, also im Bereich der keilförmigen Kanten, in Berührung. Da die Aufnahmeplatten 42 und 44 selbst aufeinanderliegen, können die durch das Zusammendrücken der Vergaserschwimmerteile 16 und 18 weggedrückten plastischen Massen nur in das Innere des Vergaserschwimmers gelangen, so daß an der Nahtfläche keine äußere Wulst entsteht. Vorteilhafterweise ist daher das spitz zulaufende Ende der keilförmigen Kante nicht an der Außenfläche, sondern vielmehr an der Innenfläche der Wandung der Vergaserschwimmerteile vorgesehen, also entgegengesetzt zur Darstellung, wie es im Ausführungsbeispiel nach Fig. 5 angedeutet ist.

Damit eine hinreichende Verbindung zwischen den Vergaserschwimmerteilen 46 und 48 erfolgt, wird nach Aufeinanderliegen der Platten 42 und 44 die bewegliche Platte 50 in Richtung auf die Platte 44 bewegt. Dadurch erfolgt eine weitere « Durchdringung » der plastisch gewordenen Kanten der Vergaserschwimmerteile 46 und 48. Jedoch ist die Krafteinwirkung der Platte 50 in Richtung auf die Platte 44 derart gewählt, daß eine Beeinflussung nur innerhalb der plastischen Bereiche erfolgt. Dadurch ist sichergestellt, daß sich, wie auch bei der Vorrichtung gemäß der Fig. 1 bis 4, keine Spannungen aufbauen.

Versuche haben gezeigt, daß die auf die Vergaserschwimmerteile einwirkenden Kräfte vorzugsweise im Größenbereich zwischen zwei bis drei N/pro Flächeneinheit liegen. Bei solchen Werten findet ein Verschweißen nur aufgrund der Durchdringung der plastischen Randbereiche der Vergaserschwimmerteile statt, wodurch ein Aufbau von Spannungen vermieden wird, die später bei großen Temperaturbelastungen zu Sprödigkeiten im Nahtbereich führen könnten.

## Ansprüche

1. Verfahren zum Herstellen eines aus zwei Kunststoff-Hohlteilen (12, 16) zusammensetzbaren Vergaserschwimmers, bei dem die Hohlteile in ihnen der Form nach angepaßten Aufnahmekörpern (14, 18) mit ihren zu veschweißenden Kanten einander gegenüberliegend angeordnet werden, die Kanten (20) mittels einer berührungslos zwischen ihnen zeitweise angeordneten Heizscheibe (32) plastifiziert werden und nach Entfernen der Heizscheibe derart zusammengebracht werden, daß sich die Kanten ausschließlich in ihren plastifizierten Bereichen zusammenfügen, dadurch gekennzeichnet, daß die zu verschweißenden Kanten der Hohlteile (12, 16 ; 46, 48) keilförmig mit einander zugekehrten Keilspitzen und als wulstförmige, umlaufende Kragen ausgeformt sind, die in eine entsprechende, im Oberflächenbereich der Aufnahmekörper (14, 18) umlaufende, ringförmige Ausnehmung eingelegt werden.

2. Verfahren nach Anspruch 1, dadurch gekennzeichnet, daß auf die Rückseiten der Vergaserschwimmerteile (12, 16) gleichermaßen eine Kraft einwirkt, durch die die Teile aufeinanderzu bewegt werden und sich in ihrem plastischen Bereich durchdringen.

3. Verfahren nach Anspruch 1, dadurch gekennzeichnet, daß eine kontrollierte Kraft nur auf eine der Vergaserschwimmerteile (46) einwirkt.

4. Vorrichtung zur Durchführung des Verfahrens nach einem der Ansprüche 1-3 mit den zu verschweißenden Hohlteilen angepaßten Aufnahmekörpern (14, 18) und einem berührungslos zwischen die Hohlteile bringbaren Heizelement (32), dadurch gekennzeichnet, daß die Aufnahmekörper (14, 18 ; 42, 44) plattenförmig und mit einer Öffnung versehen sind, in welche die Hohlteile (12, 16 ; 46, 48) eingebracht sind ; daß die Aufnahmekörper (14, 18 ; 42, 44) während des Plastifizierens der Kanten (20) zusammen mit diesen einen definierten Abstand zu dem Heizelement (32 ; 52) einnehmen ; daß zumindest eine der Aufnahmeplatten (14, 18 ; 42) rückseitig einen zweiten beweglichen Körper (22, 24 ; 50) aufweist, welcher bei Aufeinanderliegen der Aufnahmeplatten (14, 18 ; 42, 44) eine Krafteinwirkung auf die zu verschweißenden Teile (12, 16 ; 46, 48) derart verursacht, daß die Teile ausschließlich innerhalb der plastischen Bereiche gefügt werden ; und daß die forderen, keilförmig ausgebildeten wulstförmigen Kanten (20) der zu verbindenden Hohlteile (12, 16 ; 46, 48) mit der jeweiligen Frontfläche der Aufnahmeplatten (14, 18 ; 42, 44) fluchten.

5. Vorrichtung nach Anspruch 4, dadurch gekennzeichnet, daß die Vergaserschwimmerteile (12, 16) in den Aufnahmeplatten (14, 18) von vorzugsweise jeweils vier beweglich angeordneten Druckelementen (26) aufgenommen sind, durch die die Teile bei aufeinanderliegenden Aufnahmeplatten zum Verschmelzen aufeinanderzu bewegbar sind.

6. Vorrichtung nach einem der Ansprüche 4 oder 5, dadurch gekennzeichnet, daß bei einem in eine der Aufnahmeplatten (14) eingelegten, mit einem Scharnier (38) versehenen Vergaserschwimmerteil (12) der Bereich des Scharniers zum Schutz vor einer unkontrollierten Beeinflussung vom Heizelement (32) von einer mit der Frontfläche der Aufnahmeplatte fluchtenden, bewegbar in dieser eingelassenen Abdeckplatte (40) abschirmbar ist.

7. Vorrichtung nach einem der Ansprüche 4-6, dadurch gekennzeichnet, daß die Aufnahmeplatten (14, 18) jeweils eine umlaufende, ringförmige Ausnehmung (36) aufweisen, deren Tiefe der Höhe der umlaufenden, wulstförmigen Kante (20) des entsprechenden Vergaserschwimmerteils (12 bzw. 16) entspricht.

## Claims

1. Method for the manufacture of a carburettor float which can be assembled from two hollow parts (12, 16) of plastics material, in which the hollow parts are arranged in holding members (14, 18) adapted to their shape, with their edges which are to be welded lying opposite each other, the edges (20) are plasticized by means of a heating plate (32) arranged for a time therebetween without contact, and after removal of the heating plate are brought together such that the edges join together exclusively in their plasticized zones, characterized in that the edges of the hollow parts (12, 16 ; 46, 48) which are to be welded are wedge shaped with wedge tips facing towards each other, and as toroidal, circular collars, which are inserted into a corresponding circular, annular recess in the surface region of the holding members (14, 18).

2. Method according to Claim 1, characterized in that a force acts in like manner on the reverse sides of the carburettor float parts (12, 16), through which the parts are moved one against the other and penetrate each other in their plastic zone.

3. Method according to Claim 1, characterized in that a controlled force bears only on one of the carburettor floats (46).

4. Apparatus for carrying out the method according to one of Claims 1-3 with holding members (14, 18) adapted to hollow parts which are to be welded and with a heating element (32) which is able to be brought between the hollow parts without contact, characterized in that the holding members (14, 18 ; 42, 44) are plate-shaped and are provided with an opening into which the hollow parts (12, 16 ; 46, 48) are inserted ; that the holding members (14, 18 ; 42, 44) during the plasticizing of the edges (20) assume, together with the latter, a defined distance from the heating element (32 ; 52) ; that at least one of the holding plates (14, 18 ; 42) has on its reverse side a second movable member (22, 24 ; 50) which when the holding plates (14, 18 ; 42, 44) lie adjacent one another causes the action of a force onto the parts (12, 16 ; 46, 48) which are to be welded, such that the parts are joined exclusively within the plastic zones ; and that the front, wedge-shaped toroidal edges (20) of the hollow parts (12, 16 ; 46, 48) which are to be connected are in alignment with the respective front face of the holding plates (14, 18 ; 42, 44).

5. Apparatus according to Claim 4, characterized in that the carburettor float parts (12, 16) are held in the holding plates (14, 18) by preferably in each case four movably arranged pressure elements (26), through which, when the holding plates adjacent one another, the parts are movable toward each other for fusion.

6. Apparatus according to one of Claims 4 or 5, characterized in that in the case of a carburettor float part (12) which is inserted into one of the holding plates (14) and provided with an articulation (38), the region of the articulation is able to be screened, as protection against an uncontrolled influence of the heating element (32) by a cover plate (40) which is in alignment with the front face of the holding plate and is movably let into the latter.

7. Apparatus according to one of Claims 4-6, characterized in that the holding plates (14, 18) in each case have a circular, annular recess (36), the depth of which corresponds to the height of the

circular, toroidal edge (20) of the corresponding carburettor float part (12 or 16).

## Revendications

1. Procédé pour la fabrication d'un flotteur de carburateur pouvant être réalisé par assemblage de deux parties creuses (12, 16) en matière plastique, dans lequel les parties creuses sont placées dans des corps de maintien (14, 18) dont la forme correspond à la leur de telle manière que leurs bords à souder soient l'un en face de l'autre, ces bords (20) étant rendus plastiques par un disque chauffant (32) intercalé momentanément, sans contact, entre eux et, après éloignement de ce disque chauffant, appliqués l'un contre l'autre de telle manière que ces bords s'assemblent exclusivement dans leurs zones rendues plastiques, caractérisé en ce que les bords à souder des parties creuses (12, 16, 46, 48) ont la forme de coins dont les arêtes sont tournées l'une vers l'autre et qui forment des colliers périphériques en forme de bourrelets qui s'engagent dans des évidements annulaires périphériques correspondants ménagés dans la zone de la surface du corps de maintien (14, 18).

2. Procédé suivant la revendication 1, caractérisé en ce que les faces arrière des parties (12, 16) du flotteur de carburateur sont également soumises à l'action d'une force qui déplace l'une vers l'autre ces parties qui se pénètrent mutuellement dans leur zone rendue plastique.

3. Procédé suivant la revendication 1, caractérisé en ce qu'une force contrôlée n'agit que sur l'une des parties (46) du flotteur de carburateur.

4. Appareil pour l'application du procédé selon l'une des revendications 1 à 3, qui comprend des corps de maintien (14, 18) dont la forme est adaptée à celle des parties creuses à souder, et un élément chauffant (32) qui peut être intercalé sans contact entre les parties creuses, caractérisé en ce que les corps de maintien (14, 18, 42, 44) ont la forme de plaques et comportent une ouverture dans laquelle sont placées les parties creuses (12, 16, 46, 48), en ce que les corps de maintien (14, 18, 42, 44) sont placés, pour la plastification des bords (20), de même que ceux-ci, à une certaine distance de l'élément chauffant (32, 52), en ce que l'une des plaques de maintien (14, 18, 42) au moins comporte du côté arrière un deuxième corps mobile (22, 24, 50) qui, lorsque les plaques de maintien (14, 18, 42, 44) s'appliquent l'une contre l'autre, exerce sur les parties à souder (12, 16, 46, 48) une force dirigée de telle manière que ces parties s'assemblent exclusivement à l'intérieur des zones plastiques, et en ce que les bords antérieurs (20) des parties à souder (12, 16, 46, 48), qui ont la forme de coin et de bourrelets, sont sur le même alignement que les surfaces frontales des plaques de maintien (14, 18, 42, 44) correspondantes.

5. Appareil suivant la revendication 4, caractérisé en ce que les parties (12, 16) de flotteur de carburateur, sont placées dans les plaques de maintien (14, 18) sont sollicitées par des éléments de compression mobiles (26), de préférence au nombre de quatre, qui appliquent lesdites parties les unes contre les autres lorsque les plaques de maintien sont appliquées les unes contre les autres pour le soudage.

6. Appareil suivant l'une quelconque des revendications 4 ou 5, caractérisé en ce que dans une partie (12) du flotteur de carburateur placée dans l'une des plaques de maintien (14) et munie d'une charnière (38), la zone de la charnière peut, pour assurer une protection contre une action incontrôlée de l'élément chauffant (32), être protégée par une plaque couvrante (40) qui est dans l'alignement de la surface frontale de la plaque de maintien et peut s'y déplacer.

7. Appareil suivant l'une quelconque des revendications 4 à 6, caractérisé en ce que les plaques de maintien (14, 18) comportent chacune un évidement périphérique annulaire (36) dont la profondeur correspond à la hauteur du bord (20) périphérique, en forme de bourrelet, de la partie (12 ou 16) de flotteur de carburateur correspondante.

Fig.1

0 073 256

Fig. 2

0 073 256

# Fig. 3

0 073 256

# Fig.4

# Fig. 5